# EUROPEAN PATENT APPLICATION

(11) **EP 3 054 650 A1**
(43) Date of publication of application: **10.08.2016**
(21) Application number: 13896670.0
(22) Date of filing: 28.10.2013
(51) Int. Cl.: H04L 29/08

(54) **METHOD, DEVICE AND SYSTEM FOR REDIRECTING DATA SERVICE PROXY**

(71) Applicant: Huawei Technologies Co., Ltd., Longgang District Shenzhen, Guangdong 518129 (CN)
(72) Inventor: XIA, Linjin, Shenzhen Guangdong 518129 (CN); XIA, Yuan, Shenzhen Guangdong 518129 (CN); ZHOU, Junping, Shenzhen Guangdong 518129 (CN)
(74) Representative: Epping - Hermann - Fischer
(86) International application number: PCT/CN2013/086050
(87) International publication number: WO 2015/061938

(57) **Abstract**

The present invention discloses a method for redirecting data by using a service proxy, including: forwarding, according to a data storage path carried in a received first data request message sent by a client, the first data request message to a data server; receiving a redirection response message sent by the data server, where the redirection response message carries a new path for storing requested data; sending, according to the new path for storing the requested data, a second data request message to a data server that is indicated by the new path; receiving data that is requested by the client and is sent by the data server that is indicated by the new path, and sending the requested data to the client. According to the method for redirecting data by using a service proxy provided in the embodiments of the present invention, a proxy server, as a proxy of a client, can request data in a redirection process, and send acquired data to the client, thereby improving data acquiring efficiency and reducing a network delay.

## Description

### TECHNICAL FIELD

The present invention relates to the field of communications technologies, and in particular, to a method, a device, and a system for redirecting data by using a service proxy.

### BACKGROUND

On the Internet, a client uses a uniform resource locator (Uniform Resource Locator, URL) as an address to search for a server and obtain required data. However, an Internet Protocol (Internet Protocol, IP) address of a target server is changeable, and a path of data stored on a server also changes as a storage location changes. If a storage location of data to be acquired by the client changes, for example, the storage location is not on an original server, or the storage location is on an original server but is not in a file path in which the data is originally stored, when the client requests the data, the server sends a redirection response message to a terminal, and notifies the client of an updated storage path of the requested data by using the redirection response message, and then the client resends a data request to the new path, so as to obtain the required data.

In a research and practice process of the prior art, the inventor of the present invention finds that, after a storage path of data changes, when a client is to obtain the data, a request process is added, thereby increasing a network delay and degrading user experience.

### SUMMARY

Embodiments of the present invention provide a method for redirecting data by using a service proxy, which can improve data acquiring efficiency in a scenario in which redirection needs to be performed, and reduce a network delay. The embodiments of the present invention further provide a corresponding device and system.

According to a first aspect, the present invention provides a method for redirecting data by using a service proxy, including:
forwarding, according to a data storage path carried in a received first data request message sent by a client, the first data request message to a data server, where the data storage path is a storage path of data requested by the client, and the first data request message is used to request, from the data server, the data requested by the client;
receiving a redirection response message sent by the data server, where the redirection response message carries a new path for storing the requested data;
sending, according to the new path for storing the requested data, a second data request message to a data server that is indicated by the new path, where the second data request message is used to request, from the data server that is indicated by the new path, the data requested by the client; and
receiving the data that is requested by the client and is sent by the data server that is indicated by the new path, and sending the requested data to the client, so that the client acquires the requested data.

With reference to the first aspect, in a first possible implementation manner, the sending a second data request message to a data server that is indicated by the new path includes:
sending the second data request message to another data server that is indicated by the new path; and
correspondingly, the receiving the requested data sent by the data server that is indicated by the new path includes:
   receiving the requested data sent by the another data server.

With reference to the first aspect, in a second possible implementation manner, the sending a second data request message to a data server that is indicated by the new path includes:
sending the second data request message to the data server that is indicated by the new path; and
correspondingly, the receiving the requested data sent by the data server that is indicated by the new path includes:
   receiving the requested data sent by the data server, where the requested data is stored in a file path that is indicated by the new path.

With reference to the first aspect or the first or the second possible implementation manner of the first aspect, in a third possible implementation manner, before the step of forwarding the first data request message to a data server, the method further includes:
establishing a Transmission Control Protocol TCP connection to each of the client and the data server.

With reference to the first or the third possible implementation manner of the first aspect, in a fourth possible implementation manner, before the step of sending the second data request message to another data server that is indicated by the new path, the method further includes:
establishing a TCP connection to the another data server.

According to a second aspect, the present invention provides a proxy server, including:
a receiving unit, configured to receive a first data request message sent by a client;
a sending unit, configured to forward the first data request message to a data server according to a data storage path carried in the first data request message that is sent by the client and is received by the receiving unit, where the data storage path is a storage path of data requested by the client, and the first data request message is used to request, from the data server, the data requested by the client; where
the receiving unit is further configured to receive a redirection response message sent by the data server, where the redirection response message carries a new path for storing the requested data; and
a generating unit, configured to generate a second data request message according to the redirection response message received by the receiving unit; where
the sending unit is further configured to send, according to the new path for storing the requested data, the second data request message generated by the generating unit to a data server that is indicated by the new path, where the second data request message is used to request, from the data server that is indicated by the new path, the data requested by the client;
the receiving unit is further configured to receive the data that is requested by the client and is sent by the data server that is indicated by the new path; and
the sending unit is further configured to send the requested data to the client, so that the client acquires the requested data.

With reference to the second aspect, in a first possible implementation manner,
the sending unit is configured to send the second data request message to another data server that is indicated by the new path; and
the receiving unit is configured to receive the requested data sent by the another data server.

With reference to the second aspect, in a second possible implementation manner,
the sending unit is configured to send the second data request message to the data server that is indicated by the new path; and
the receiving unit is configured to receive the requested data sent by the data server, where the requested data is stored in a file path that is indicated by the new path.

With reference to the second aspect or the first or the second possible implementation manner of the second aspect, in a third possible implementation manner,
the proxy server further includes:
a first connection establishment unit, configured to: before the sending unit forwards the first data request message to the data server, establish a Transmission Control Protocol TCP connection to each of the client and the data server.

With reference to the first or the third possible implementation manner of the second aspect, in a fourth possible implementation manner,
the proxy server further includes:
a second connection establishment unit, configured to: before the sending unit sends the second data request message to the another data server that is indicated by the new path, establish a TCP connection to the another data server.

According to a third aspect, the present invention provides a proxy server, including an input device, an output device, a processor, and a memory, where
the input device is configured to receive a first data request message sent by a client;
the output device is configured to forward the first data request message that is sent by the client to a data server;
the input device is configured to forward the first data request message to the data server according to a data storage path carried in the received first data request message sent by the client, where the data storage path is a storage path of data requested by the client, and the first data request message is used to request, from the data server, the data requested by the client;
the output device is further configured to receive a redirection response message sent by the data server, where the redirection response message carries a new path for storing the requested data;
the processor is configured to generate a second data request message according to the redirection response message;
the output device is further configured to send, according to the new path for storing the requested data, the second data request message to a data server that is indicated by the new path, where the second data request message is used to request, from the data server that is indicated by the new path, the data requested by the client;
the input device is further configured to receive the data that is requested by the client and is sent by the data server that is indicated by the new path; and
the output device is further configured to send the requested data to the client, so that the client acquires the requested data.

With reference to the third aspect, in a first possible implementation manner,
the output device is configured to send the second data request message to another data server that is indicated by the new path; and
the input device is configured to receive the requested data sent by the another data server.

With reference to the third aspect, in a second possible implementation manner,
the output device is configured to send the second data request message to the data server that is indicated by the new path; and
the input device is configured to receive the requested data sent by the data server, where the requested data is stored in a file path that is indicated by the new path.

With reference to the third aspect and the first or the second possible implementation manner of the third aspect, in a third possible implementation manner,
the processor is further configured to: before the first data request message is forwarded to the data server, establish a Transmission Control Protocol TCP connection to each of the client and the data server.

With reference to the first or the third possible implementation manner of the third aspect, in a fourth possible implementation manner,
the processor is further configured to: before the first data request message is forwarded to the data server, establish a Transmission Control Protocol TCP connection to each of the client and the data server.

According to a fourth aspect, the present invention provides a data acquiring system, including a client, a proxy server, and a data server, where
the client sends a first data request message to the proxy server, where the first data request message carries a data storage path, and the data storage path is a storage path of data requested by the client;
the data server stores the data requested by the client; and
the proxy server is the proxy server according to the foregoing technical solution.

According to the embodiments of the present invention, according to a data storage path carried in a received first data request message sent by a client, the first data request message is forwarded to a data server, where the data storage path is a storage path of data requested by the client, and the first data request message is used to request, from the data server, the data requested by the client; a redirection response message sent by the data server is received, where the redirection response message carries a new path for storing the requested data; a second data request message is sent, according to the new path for storing the requested data, to a data server that is indicated by the new path, where the second data request message is used to request, from the data server that is indicated by the new path, the data requested by the client; the data that is requested by the client and is sent by the data server that is indicated by the new path is received, and the requested data is sent to the client, so that the client acquires the requested data. Compared with a process in which a client needs to send a request to a data server again in a redirection scenario in the prior art, according to the method for redirecting data by using a service proxy provided in the embodiments of the present invention, a proxy server, as a proxy of a client, can request data in a redirection process, and send acquired data to the client, thereby improving data acquiring efficiency and reducing a network delay.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a schematic diagram of a method for redirecting data by using a service proxy according to an embodiment of the present invention;
FIG. 2 is a schematic diagram of a method for redirecting data by using a service proxy according to another embodiment of the present invention;
FIG. 3 is a schematic diagram of a method for redirecting data by using a service proxy according to another embodiment of the present invention;
FIG. 4 is a schematic diagram of a method for redirecting data by using a service proxy according to another embodiment of the present invention;
FIG. 5 is a schematic diagram of a method for redirecting data by using a service proxy according to another embodiment of the present invention;
FIG. 6 is a schematic diagram of a proxy server according to an embodiment of the present invention;
FIG. 7 is a schematic diagram of a proxy server according to another embodiment of the present invention;
FIG. 8 is a schematic diagram of a proxy server according to another embodiment of the present invention;
FIG. 9 is a schematic diagram of a proxy server according to another embodiment of the present invention; and
FIG. 10 is a schematic diagram of a data acquiring system according to an embodiment of the present invention.

### DESCRIPTION OF EMBODIMENTS

Embodiments of the present invention provide a method for redirecting data by using a service proxy, which can improve data acquiring efficiency, and reduce a network delay in a scenario in which redirection needs to be performed. The embodiments of the present invention further provide a corresponding device and system. Detailed descriptions are provided separately in the following.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

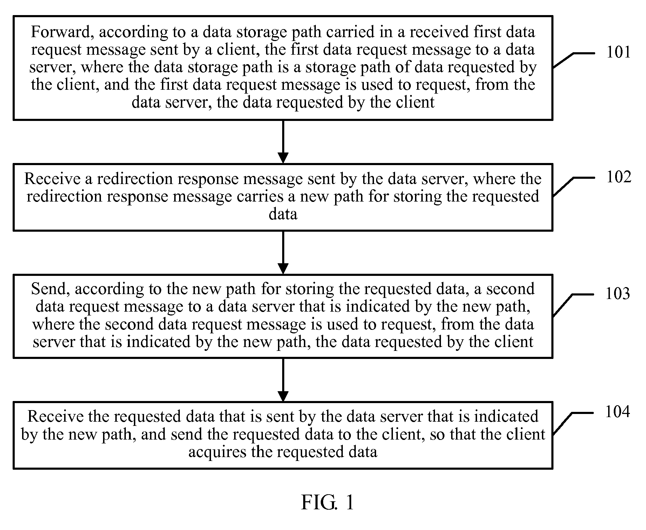

Referring to FIG. 1, a method for redirecting data by using a service proxy according to an embodiment of the present invention includes:
101: Forward, according to a data storage path carried in a received first data request message sent by a client, the first data request message to a data server, where the data storage path is a storage path of data requested by the client, and the first data request message is used to request, from the data server, the data requested by the client.

If communication between the client and the data server needs to be performed with assistance of a proxy server, when the client requests the data from the data server, the storage path of the requested data needs to be carried in a data request message; in this way, the proxy server may find a corresponding data server according to the storage path, and send the data request message to the data server.
102: Receive a redirection response message sent by the data server, where the redirection response message carries a new path for storing the requested data.

In this embodiment of the present invention, when a storage location of the data requested by the client changes, for example, the storage location is not on an original server, or the storage location is on an original server but the data is not stored in an original folder, the data server sends the redirection response message to the proxy server, so as to notify the client of the new path for currently storing the requested data.
103: Send, according to the new path for storing the requested data, a second data request message to a data server that is indicated by the new path, where the second data request message is used to request, from the data server that is indicated by the new path, the data requested by the client.

The proxy server directly sends, according to the new path for storing the requested data, a data request message to the server that is indicated by the new path.
104: Receive the data that is requested by the client and is sent by the data server that is indicated by the new path, and send the requested data to the client, so that the client acquires the requested data.

After receiving the data request message, a proxy server that is indicated by the new path sends the requested data to the proxy server; and after receiving the data requested by the client, the proxy server sends the data requested by the client to the client.

According to this embodiment of the present invention, according to a data storage path carried in a received first data request message sent by a client, the first data request message is forwarded to a data server, where the data storage path is a storage path of data requested by the client, and the first data request message is used to request, from the data server, the data requested by the client; a redirection response message sent by the data server is received, where the redirection response message carries a new path for storing the requested data; a second data request message is sent, according to the new path for storing the requested data, to a data server that is indicated by the new path, where the second data request message is used to request, from the data server that is indicated by the new path, the data requested by the client; and the requested data sent by the data server that is indicated by the new path is received, and the data requested by the client is sent to the client, so that the client acquires the requested data. Compared with a process in which a client needs to send a request to a data server again in a redirection scenario in the prior art, according to the method for redirecting data by using a service proxy provided in this embodiment of the present invention, a proxy server, as a proxy of a client, can request data in a redirection process, and send acquired data to the client, thereby improving data acquiring efficiency and reducing a network delay.

Optionally, based on the embodiment corresponding to FIG. 1, in an optional embodiment of the method for redirecting data by using a service proxy provided in this embodiment of the present invention, the sending a second data request message to a data server that is indicated by the new path may include:
sending the second data request message to another data server that is indicated by the new path; and
correspondingly, the receiving the requested data sent by the data server that is indicated by the new path may include:
   receiving the requested data sent by the another data server.

In this embodiment of the present invention, when the storage location of the data is not on the original server, the new path indicates a new data server for storing the data; in this way, the proxy server sends the second data request message to the new data server that is indicated by the new path, and then receives the requested data from the new data server.

For example, a domain name of the original data server for storing the data requested by the client is www.abc.com, and after the storage location of the data changes, the data is currently stored on a data server with a domain name of www.def.com; then, after the proxy server learns, according to a new path, which is carried in a redirection response message, for storing the requested data, that the requested data is stored on the data server with the domain name of www.def.com, the proxy server sends a second data request message to the data server with the domain name of www.def.com, and then receives the requested data sent by the data server with the domain name of www.def.com.

Optionally, based on the embodiment corresponding to FIG. 1, in another optional embodiment of the method for redirecting data by using a service proxy provided in this embodiment of the present invention, the sending a second data request message to a data server that is indicated by the new path may include:
sending the second data request message to the data server that is indicated by the new path; and
correspondingly, the receiving the requested data sent by the data server that is indicated by the new path may include:
   receiving the requested data sent by the data server, where the requested data is stored in a file path that is indicated by the new path.

In this embodiment of the present invention, when the requested data is still on the original data server, but is not stored in an original file path, for example, the requested data is moved from a file path named /123 to a file path named /456, if the proxy server learns, according to the new path, which is carried in the redirection response message, for storing the requested data, that the data is in the file path named /456, the proxy server sends the second data request message to the data server again, to request the requested data in the file path named /456.

Optionally, based on any one of the foregoing embodiments, in another optional embodiment of the method for redirecting data by using a service proxy provided in this embodiment of the present invention, before the step of forwarding the first data request message to a data server, the method may further include:
establishing a Transmission Control Protocol (Transmission Control Protocol, TCP) connection to each of the client and the data server.

In this embodiment of the present invention, data can be transmitted by using the TCP Protocol only when the proxy server establishes a TCP connection to each of the client and the data server.

Optionally, based on any one of the foregoing embodiments, in another optional embodiment of the method for redirecting data by using a service proxy provided in this embodiment of the present invention, before the step of sending the second data request message to another data server that is indicated by the new path, the method may further include:
establishing a TCP connection to the another data server.

In this embodiment of the present invention, when the new path indicates that the requested data is currently stored on another data server, the proxy server needs to first establish a TCP connection to the another data server, to facilitate subsequent data communication.

For ease of understanding, two application scenarios are used as examples in the following to describe a process of redirecting data by using a service proxy in this embodiment of the present invention.

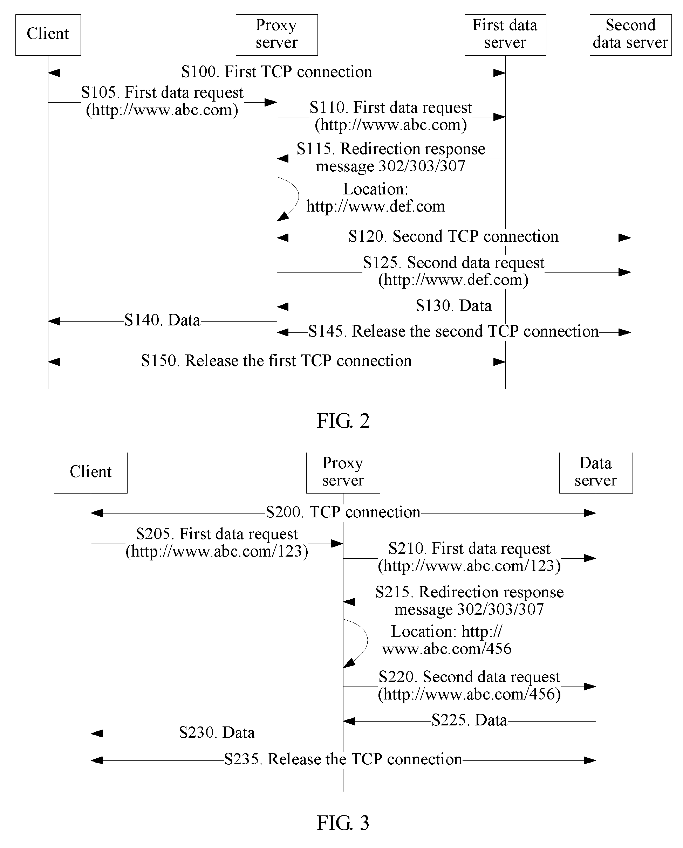

Referring to FIG. 2, FIG. 2 shows an application scenario in which redirection is performed to a different data server.
S100: A proxy server establishes a first TCP connection to each of a client and a first data server.

The client Client initiates establishment of a TCP connection to the first data server server 1, and the proxy server PROXY establishes a TCP connection to each of the client and the server 1.
S105 to S110: The client sends a first data request message to the proxy server, and the proxy server forwards the first data request message to the first data server.

The first data request message is used to request, from the first data server, data requested by the client.

The first data request message sent by the client carries a storage path of the data requested by the client, and the proxy server forwards the first data request message according to the storage path.

For example, the client Client initiates, to the first data server server 1, an HTTP request to www.abc.com, and the proxy server forwards the first data request message to the server 1 according to www.abc.com.
S 115: The first data server sends a redirection response message to the proxy server, where the redirection response message carries a new path for storing the requested data.

After determining that the requested data in the first data request message has already not been stored on the first data server, the first data server finds a location at which the requested data is currently stored, for example, if a current storage path is www.def.com, the redirection response message carries www.def.com.

The first data server server 1 responds to 30*(302/303/307), and clearly indicates, in a header field "location" in the response, that a destination host to which redirection is needed to be performed is www.def.com.
S120: The proxy server establishes a second TCP connection to a second data server.

If the proxy server determines, according to the new path carried in the redirection response message, that the requested data is currently stored on the second data server, the proxy server PROXY establishes a connection to the second data server server 2.
S125: The proxy server sends a second data request message to the second data server.

The second data request message is used to request, from the second data server, the data requested by the client.

The second data request message carries information about the requested data, and in this way, the second data server finds the requested data.
S130: The second data server returns, to the proxy server, the data requested by the client.
S140: The proxy server returns, to the client, the data requested by the client.
S 145: The proxy server releases the second TCP connection.

After receiving the data from the second data server server 2, the proxy server PROXY disconnects a TCP connection to an HTTP server 2, so as to release a link resource, thereby improving efficiency of using the link resource.
S150: The proxy server releases the first TCP connection.

After sending the data to the client, the proxy server PROXY disconnects a TCP connection to each of the client and an HTTP server 1, so as to release a link resource, thereby improving efficiency of using the link resource.

In the application scenario of the present invention, a case in which data requested by a client is not stored on an original first data server; in this way, the first data server sends a redirection response to a proxy server, to notify the proxy server of path information of a data server on which the data requested by the client is currently stored, that is, path information of a second data server; then, the proxy server can request, from the second data server, the data requested by the client. Compared with a process in which a client needs to send a request to a data server again in a redirection scenario in the prior art, according to the method for redirecting data by using a service proxy provided in this embodiment of the present invention, a proxy server, as a proxy of a client, can request data in a redirection process, and send acquired data to the client, thereby improving data acquiring efficiency and reducing a network delay.

Referring to FIG. 3, FIG. 3 shows an application scenario in which redirection is performed to a same data server.
S200: A proxy server establishes a TCP connection to each of a client and a data server.

The Client initiates establishment of a TCP connection to an HTTP server, and the proxy server establishes a TCP connection to each of the client and the server.
S205 to S210: The client sends a first data request message to the proxy server, and the proxy server forwards the first data request message to the data server.

The first data request message is used to request, from the proxy server, data requested by the client.

The first data request message sent by the client carries a storage path of the data requested by the client, and the proxy server forwards the first data request message according to the storage path.

For example, the client Client initiates, to the HTTP server, an HTTP request to www.abc.com/123, and the proxy server forwards the first data request message to the server according to www.abc.com/123.
S215: The data server sends a redirection response message to the proxy server, where the redirection response message carries a new path for storing the requested data.

After determining that the requested data in the first data request message is on the data server but has already not been stored in an original file path, the data server finds a file path in which the requested data is currently stored, for example, if a current storage path is www.abc.com/456, the redirection response message carries www.abc.com/456.

The data server responds to 30*(302/303/307), and clearly indicates, in a header field "location" in the response, that redirection needs to be performed to a file path www.abc.com/456 of this host.
S220: The proxy server sends a second data request message to the data server.

The second data request message is used to request, from the file path www.abc.com/456 of the data server, the data requested by the client.

The proxy server initiates, to the data server, a request for the requested data in the file path www.abc.com/456.

The second data request message carries information about the requested data, and in this way, the second data server finds the requested data.
S225: The data server returns the requested data to the proxy server.
S230: The proxy server returns, to the client, the data requested by the client.
S235: The proxy server releases the TCP connection.

The proxy server disconnects the TCP connection to each of the client and the HTTP server, so as to release a link resource, thereby improving efficiency of using the link resource.

Compared with a process in which a client needs to send a request to a data server again in a redirection scenario in the prior art, according to the method for redirecting data by using a service proxy provided in this embodiment of the present invention, a proxy server, as a proxy of a client, can request data in a redirection process, and send acquired data to the client, thereby improving data acquiring efficiency and reducing a network delay.

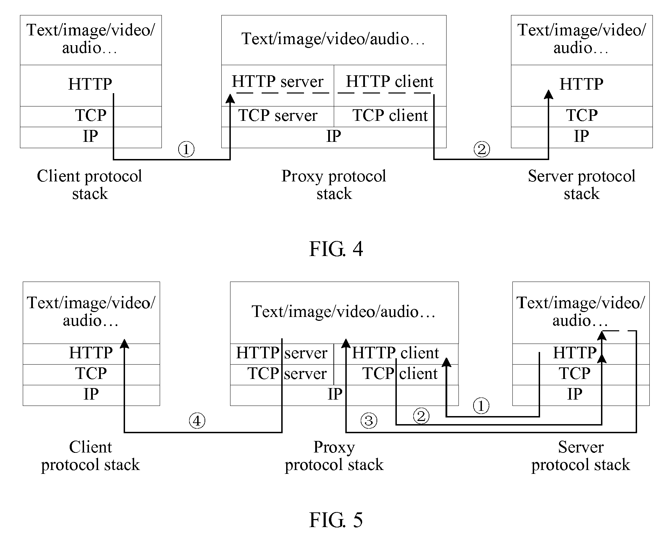

When the data in this embodiment of the present invention is Hypertext Transfer Protocol (Hypertext transfer protocol, HTTP) data, a data encapsulation process from the client to the proxy server and then to the data server may be as follows:
Referring to FIG. 4, FIG. 4 shows a process in which an HTTP request passes through a protocol stack of a proxy server PROXY in a redirection scenario:
   Arrow ①: A client client initiates a request for data on a network, and an HTTP layer of the client encapsulates an HTTP request packet; downwards, fragmentation encapsulation is performed on the HTTP request packet by a TCP layer according to the protocol stack, and then fragmentation encapsulation is performed on a TCP request packet by an Internet Protocol (Internet Protocol, IP) layer; the request sent by the client is transmitted into the protocol stack of the proxy server PROXY; because the proxy server interacts with the client, in a process of establishing a TCP connection, a stack socket for communicating with the client is created on a server server side of the protocol stack of the PROXY server; and the packet is parsed at the HTTP layer after TCP/IP decapsulation and recombination.
   Arrow ②: The HTTP request packet needs to be sent again by the proxy server to a network server, the client side of the protocol stack of the proxy server, encapsulates and fragments data layer by layer according to a structure of the protocol stack, and similarly, a socket on the client side has already been established in the process of establishing a TCP connection; the HTTP request packet enters a protocol stack of the network server, and processing by an IP/TCP/HTTP layer is consistent with processing by the PROXY; in an intelligent redirection scenario, when parsing the request packet and acquiring an object path, the HTTP layer of the network server finds that object data that needs to be acquired by the client client has already not been in the file path, or even has already not been on the current server; and so far, the process for processing an uplink packet of an HTTP transaction ends.

Referring to FIG. 5, FIG. 5 shows a process in which an HTTP response passes
through a protocol stack of a proxy server PROXY in a redirection scenario:
Arrow ①: In a redirection scenario, when parsing a request packet and acquiring an object path, an HTTP layer of a data server finds that object data that needs to be acquired by a client client has already not been in the file path, or even has already not been on the current server; therefore, a network server sends a redirection response packet.
Arrow ②: After parsing the redirection response packet from the network server, the PROXY initiates a new TCP connection to a server (which may be an original server, or may be another data server) to which redirection is performed, and initiates, over this TCP connection, an HTTP request for acquiring data content in a new path.
Arrow ③: After finding, based on the requested content, an object to be acquired, a network server of the new path encapsulates an HTTP response, and returns the encapsulated HTTP response to the PROXY.
Arrow ④: After acquiring correct response data over a connection between a server side of the PROXY and the client Client, the PROXY, as a proxy of the data server, returns the correct response data to the client client for parsing and displaying; and so far, an HTTP transaction downlink processing process optimized by means of redirection and by using a proxy ends.

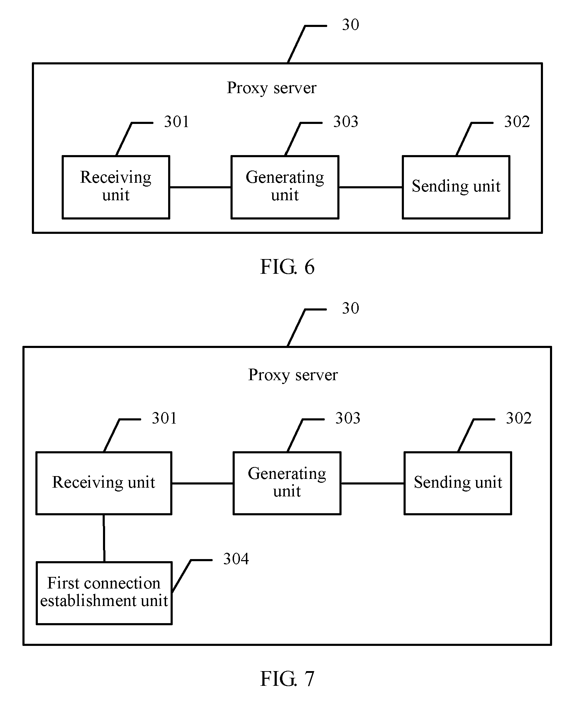

Referring to FIG. 6, a proxy server according to an embodiment of the present invention includes:
a receiving unit 301, configured to receive a first data request message sent by a client;
a sending unit 302, configured to forward the first data request message to a data server according to a data storage path carried in the first data request message that is sent by the client and is received by the receiving unit 301, where the data storage path is a storage path of data requested by the client, and the first data request message is used to request, from the data server, the data requested by the client; where
the receiving unit 301 is further configured to receive a redirection response message sent by the data server, where the redirection response message carries a new path for storing the requested data; and
a generating unit 303, configured to generate a second data request message according to the redirection response message received by the receiving unit 301; where
the sending unit 302 is further configured to send, according to the new path for storing the requested data, the second data request message generated by the generating unit to a data server that is indicated by the new path, where the second data request message is used to request, from the data server that is indicated by the new path, the data requested by the client;
the receiving unit 301 is further configured to receive the requested data sent by the data server that is indicated by the new path; and
the sending unit 302 is further configured to send the requested data to the client, so that the client acquires the requested data.

In this embodiment of the present invention, the receiving unit 301 receives a first data request message sent by a client; the sending unit 302 forwards the first data request message to a data server according to a data storage path carried in the first data request message that is sent by the client and is received by the receiving unit 301, where the data storage path is a storage path of data requested by the client, and the first data request message is used to request, from the data server, the data requested by the client; the receiving unit 301 further receives a redirection response message sent by the data server, where the redirection response message carries a new path for storing the requested data; the generating unit 303 generates a second data request message according to the redirection response message received by the receiving unit 301, where the second data request message is used to request, from a data server that is indicated by the new path, the data requested by the client; the sending unit 302 further sends, according to the new path for storing the requested data, the second data request message generated by the generating unit to the data server that is indicated by the new path; the receiving unit 301 further receives the requested data sent by the data server that is indicated by the new path; the sending unit 302 further sends the requested data to the client, so that the client acquires the requested data. Compared with a process in which a client needs to send a request to a data server again in a redirection scenario in the prior art, the proxy server, as a proxy of a client, provided in this embodiment of the present invention can request data in a redirection process, and send acquired data to the client, thereby improving data acquiring efficiency and reducing a network delay.

Based on the embodiment corresponding to FIG. 6, in another embodiment of the proxy server provided in this embodiment of the present invention,
the sending unit 302 is configured to send the second data request message to another data server that is indicated by the new path; and
the receiving unit 301 is configured to receive the requested data sent by the another data server.

Based on the embodiment corresponding to FIG. 6, in another embodiment of the proxy server provided in this embodiment of the present invention,
the sending unit 302 is configured to send the second data request message to the data server that is indicated by the new path; and
the receiving unit 301 is configured to receive the requested data sent by the data server, where the requested data is stored in a file path that is indicated by the new path.

Based on the embodiment corresponding to FIG. 6, referring to FIG. 7, in another embodiment of the proxy server provided in this embodiment of the present invention,
the proxy server 30 further includes:
a first connection establishment unit 304, configured to: before the sending unit forwards the first data request message to the data server, establish a Transmission Control Protocol TCP connection to each of the client and the data server.

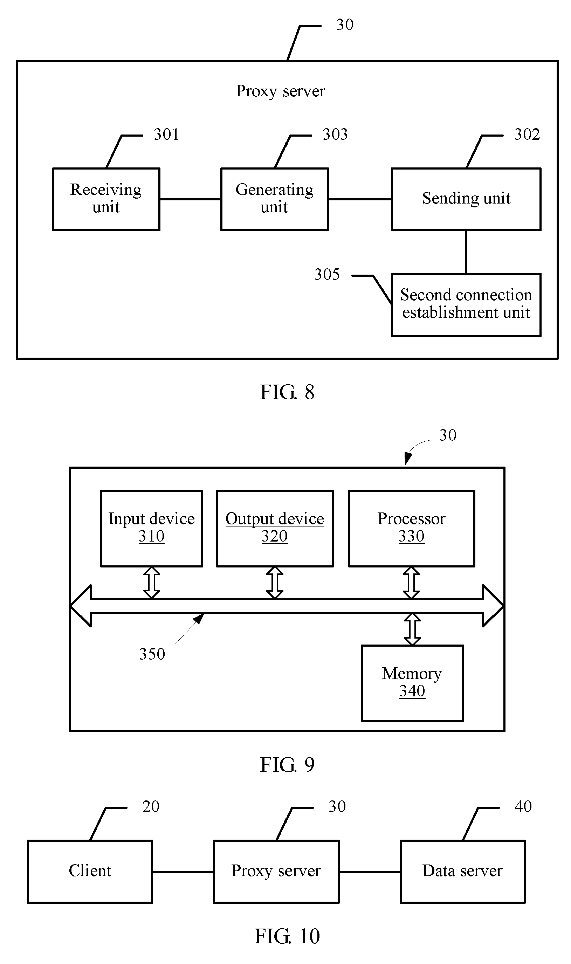

Based on the embodiment corresponding to FIG. 6, referring to FIG. 8, in another embodiment of the proxy server provided in this embodiment of the present invention, the proxy server further includes:
a second connection establishment unit 305, configured to: before the sending unit sends the second data request message to the another data server that is indicated by the new path, establish a TCP connection to the another data server.

The present invention further provides a computer storage medium, and the medium stores a program. When the program is executed, some or all of the steps of the foregoing method for redirecting data by using a service proxy are performed.

FIG. 9 is a schematic structural diagram of a proxy server 30 according to an embodiment of the present invention. The proxy server 30 may include an input device 310, an output device 320, a processor 330, and a memory 340.

The memory 340 may include a read-only memory and a random access memory, and provides an instruction and data for the processor 330. The memory 340 may further include a nonvolatile random access memory (NVRAM).

The memory 340 stores the following elements, executable modules or data structures, or a subset thereof, or an extended set thereof, where
operation instructions include various operation instructions, which are used to implement various operations; and
an operating system includes various system programs, which are used to implement various basic services and process hardware-based tasks.

In this embodiment of the present invention, the processor 330 performs, by invoking the operation instructions (the operation instructions may be stored in the operating system) stored in the memory 340, the following operations:
receiving, by the input device 310, a first data request message sent by a client; forwarding, by the output device 320, the first data request message that is sent by the client to a data server; forwarding, by the input device 310, the first data request message to the data server according to a data storage path carried in the received first data request message sent by the client, where the first data request message is used to request, from the data server, data requested by the client, and the data storage path is a storage path of the data requested by the client; receiving, by the output device 320, a redirection response message sent by the data server, where the redirection response message carries a new path for storing the requested data; sending, by the output device 320 according to the new path for storing the requested data, a second data request message to a data server that is indicated by the new path, where the second data request message is used to request, from the data server that is indicated by the new path, the data requested by the client; receiving, by the input device 310, the requested data sent by the data server that is indicated by the new path; and sending, by the output device 320, the requested data to the client, so that the client acquires the requested data.

Compared with a process in which a client needs to send a request to a data server again in a redirection scenario in the prior art, the proxy server, as a proxy of a client, provided in this embodiment of the present invention requests data in a redirection process, and sends acquired data to the client, thereby improving data acquiring efficiency and reducing a network delay.

The processor 330 controls operations of the proxy server 30, and the processor 330 may further be referred to as a CPU (Central Processing Unit, central processing unit). The memory 340 may include a read-only memory and a random access memory, and provides an instruction and data for the processor 330. The memory 340 may further include a nonvolatile random access memory (NVRAM). In a specific application, components of the proxy server 30 are coupled together by using a bus system 350. In addition to a data bus, the bus system 350 may further include a power bus, a control bus, a status signal bus, and the like. However, for a clear description, the various buses are marked as the bus system 350 in the figure.

The methods disclosed in the embodiments of the present invention may be applied to the processor 330, or is implemented by the processor 330. The processor 330 may be an integrated circuit chip that has a signal processing capability. In an implementation process, steps of the foregoing methods may be performed by using an integrated logic circuit of hardware in the processor 330 or instructions in a form of software. The foregoing processor 330 may be a general purpose processor, a digital signal processor (DSP), an application-specific integrated circuit (ASIC), a field programmable gate array (FPGA), or another programmable logic device, discrete gate or transistor logic device, or discrete hardware component, and may implement or perform the methods, steps, and logical block diagrams disclosed in the embodiments of the present invention. The general purpose processor may be a microprocessor, or the processor may be any conventional processor, or the like. In combination with the embodiments of the present invention, the steps of the disclosed methods may be directly implemented by a hardware decoding processor, or implemented by a combination of hardware and software modules in a decoding processor. A software module may be located in a mature storage medium in the field, such as a random access memory, a flash memory, a read-only memory, a programmable read-only memory, an electrically erasable programmable memory, or a register. The storage medium is located in the memory 340, and the processor 330 reads information in the memory 340 and implements the steps of the foregoing methods in combination with hardware thereon.

Optionally, the output device 320 is configured to send the second data request message to another data server that is indicated by the new path; and
the input device 310 is configured to receive the requested data sent by the another data server.

Optionally, the output device 320 is configured to send the second data request message to the data server that is indicated by the new path; and
the input device 310 is configured to receive the requested data sent by the data server, where the requested data is stored in a file path that is indicated by the new path.

Optionally, the processor 330 is configured to: before the first data request message is forwarded to the data server, establish a Transmission Control Protocol TCP connection to each of the client and the data server.

Optionally, the processor 330 is further configured to: before the first data request message is forwarded to the data server, establish a Transmission Control Protocol TCP connection to each of the client and the data server.

Referring to FIG. 10, an embodiment of a data acquiring system according to an embodiment of the present invention includes: a client 20, a proxy server 30, and a data server 40, where
the client 20 sends a first data request message to the proxy server 30, where the first data request message carries a data storage path, the data storage path is a storage path of data requested by the client, and the first data request message is used to request, from the data server, the data requested by the client;
the data server 40 stores the data requested by the client; and
the proxy server 30 is configured to forward the first data request message to the data server according to the data storage path carried in the received first data request message sent by the client, where the data storage path is the storage path of the data requested by the client; receive a redirection response message sent by the data server, where the redirection response message carries a new path for storing the requested data; send, according to the new path for storing the requested data, a second data request message to a data server that is indicated by the new path, where the second data request message is used to request, from the data server that is indicated by the new path, the data requested by the client; and receive the requested data sent by the data server that is indicated by the new path, and send the requested data to the client, so that the client acquires the requested data.

A person of ordinary skill in the art may understand that all or some of the steps of the methods in the foregoing embodiments may be implemented by a program instructing relevant hardware. The program may be stored in a computer readable storage medium. The storage medium may include: a ROM, a RAM, a magnetic disk, or an optical disc.

The method, the device, and the system for redirecting data by using a service proxy that are provided in the embodiments of the present invention are introduced in detail in the foregoing. The principle and implementation manners of the present invention are described in this specification by using specific examples. The foregoing descriptions about the embodiments are merely provided for helping understand the method and core ideas of the present invention. Meanwhile, a person of ordinary skill in the art may make modifications to the specific implementation manners and application scopes according to the ideas of the present invention. To sum up, the content of this specification shall not be construed as a limitation to the present invention.

## Claims

1. A method for redirecting data by using a service proxy, comprising:
forwarding, according to a data storage path carried in a received first data request message sent by a client, the first data request message to a data server, wherein the data storage path is a storage path of data requested by the client, and the first data request message is used to request, from the data server, the data requested by the client;
receiving a redirection response message sent by the data server, wherein the redirection response message carries a new path for storing the requested data;
sending, according to the new path for storing the requested data, a second data request message to a data server that is indicated by the new path, wherein the second data request message is used to request, from the data server that is indicated by the new path, the data requested by the client; and
receiving the data that is requested by the client and is sent by the data server that is indicated by the new path, and sending the requested data to the client, so that the client acquires the requested data.

2. The method according to claim 1, wherein the sending a second data request message to a data server that is indicated by the new path comprises:
sending the second data request message to another data server that is indicated by the new path; and
correspondingly, the receiving the requested data sent by the data server that is indicated by the new path comprises:
receiving the requested data sent by the another data server.

3. The method according to claim 1, wherein the sending a second data request message to a data server that is indicated by the new path comprises:
sending the second data request message to the data server that is indicated by the new path; and
correspondingly, the receiving the requested data sent by the data server that is indicated by the new path comprises:
receiving the requested data sent by the data server, wherein the requested data is stored in a file path that is indicated by the new path.

4. The method according to any one of claims 1 to 3, wherein before the step of forwarding the first data request message to a data server, the method further comprises:
establishing a Transmission Control Protocol TCP connection to each of the client and the data server.

5. The method according to claim 2 or 4, wherein before the step of sending the second data request message to another data server that is indicated by the new path, the method further comprises:
establishing a TCP connection to the another data server.

6. A proxy server, comprising:
a receiving unit, configured to receive a first data request message sent by a client;
a sending unit, configured to forward the first data request message to a data server according to a data storage path carried in the first data request message that is sent by the client and is received by the receiving unit, wherein the data storage path is a storage path of data requested by the client, and the first data request message is used to request, from the data server, the data requested by the client; wherein
the receiving unit is further configured to receive a redirection response message sent by the data server, wherein the redirection response message carries a new path for storing the requested data; and
a generating unit, configured to generate a second data request message according to the redirection response message received by the receiving unit; wherein
the sending unit is further configured to send, according to the new path for storing the requested data, the second data request message generated by the generating unit to a data server that is indicated by the new path, wherein the second data request message is used to request, from the data server that is indicated by the new path, the data requested by the client;
the receiving unit is further configured to receive the data that is requested by the client and is sent by the data server that is indicated by the new path; and
the sending unit is further configured to send the requested data to the client, so that the client acquires the requested data.

7. The proxy server according to claim 6, wherein
the sending unit is configured to send the second data request message to another data server that is indicated by the new path; and
the receiving unit is configured to receive the requested data sent by the another data server.

8. The proxy server according to claim 6, wherein
the sending unit is configured to send the second data request message to the data server that is indicated by the new path; and
the receiving unit is configured to receive the requested data sent by the data server, wherein the requested data is stored in a file path that is indicated by the new path.

9. The proxy server according to any one of claims 6 to 8, wherein the proxy server further comprises:
a first connection establishment unit, configured to: before the sending unit forwards the first data request message to the data server, establish a Transmission Control Protocol TCP connection to each of the client and the data server.

10. The proxy server according to claim 7 or 9, wherein the proxy server further comprises:
a second connection establishment unit, configured to: before the sending unit sends the second data request message to the another data server that is indicated by the new path, establish a TCP connection to the another data server.

11. A proxy server, comprising an input device, an output device, a processor, and a memory, wherein
the input device is configured to receive a first data request message sent by a client;
the output device is configured to forward the first data request message that is sent by the client to a data server;
the input device is configured to forward the first data request message to the data server according to a data storage path carried in the received first data request message sent by the client, wherein the data storage path is a storage path of data requested by the client, and the first data request message is used to request, from the data server, the data requested by the client;
the output device is further configured to receive a redirection response message sent by the data server, wherein the redirection response message carries a new path for storing the requested data;
the processor is configured to generate a second data request message according to the redirection response message;
the output device is further configured to send, according to the new path for storing the requested data, the second data request message to a data server that is indicated by the new path, wherein the second data request message is used to request, from the data server that is indicated by the new path, the data requested by the client;
the input device is further configured to receive the data that is requested by the client and is sent by the data server that is indicated by the new path; and
the output device is further configured to send the requested data to the client, so that the client acquires the requested data.

12. The proxy server according to claim 11, wherein
the output device is configured to send the second data request message to another data server that is indicated by the new path; and
the input device is configured to receive the requested data sent by the another data server.

13. The proxy server according to claim 11, wherein
the output device is configured to send the second data request message to the data server that is indicated by the new path; and
the input device is configured to receive the requested data sent by the data server, wherein the requested data is stored in a file path that is indicated by the new path.

14. The proxy server according to any one of claims 11 to 13, wherein
the processor is further configured to: before the first data request message is forwarded to the data server, establish a Transmission Control Protocol TCP connection to each of the client and the data server.

15. The proxy server according to claim 12 or 14, wherein
the processor is further configured to: before the first data request message is forwarded to the data server, establish a Transmission Control Protocol TCP connection to each of the client and the data server.

16. A data acquiring system, comprising a client, a proxy server, and a data server, wherein
the client sends a first data request message to the proxy server, wherein the first data request message carries a data storage path, and the data storage path is a storage path of data requested by the client;
the data server stores the data requested by the client; and
the proxy server is the proxy server according to any one of claims 6 to 10.
